# EUROPÄISCHE PATENTSCHRIFT

(11) **EP 1 360 430 B1**
(45) Veröffentlichungstag und Bekanntmachung des Hinweises auf die Patenterteilung: **29.11.2006**
(21) Anmeldenummer: 02702311.8
(22) Anmeldetag: 25.01.2002
(51) Int. Cl.: F16F 3/093

(54) **FEDERELEMENT**
SPRING ELEMENT
ELEMENT D'AMORTISSEMENT

(30) Priorität: 07.02.2001 DE 10105791
(43) Veröffentlichungstag der Anmeldung: 12.11.2003
(73) Patentinhaber: BASF Aktiengesellschaft, 67056 Ludwigshafen (DE)
(72) Erfinder: HEIDEMANN, Josef, 49459 Lembruch (DE); BRÜNING, Kai, 27232 Sulingen (DE); DULTMEYER, Josef, 49439 Steinfeld (DE)
(86) Internationale Anmeldenummer: PCT/EP2002/000769
(87) Internationale Veröffentlichungsnummer: WO 2002/063179

(56) Entgegenhaltungen:
- EP-A- 0 778 166
- EP-A- 0 818 638
- DE-A- 4 230 249
- JP-A- 11 325 148
- US-A- 2 982 536
- US-A- 3 144 247
- US-A- 3 346 221
- US-A- 3 399 851
- US-A- 4 085 832
- US-A- 4 235 371
- US-A- 5 852 394
- PATENT ABSTRACTS OF JAPAN vol. 1999, no. 10, 31. August 1999 (1999-08-31) & JP 11 140153 A (SUMITOMO LIGHT METAL IND LTD;IIDA SANGYO KK), 25. Mai 1999 (1999-05-25)

## Beschreibung

Die Erfindung betrifft Automobile enthaltend Federelemente basierend auf mindestens zwei elastischen Formkörpern (i) und (ii), die über mindestens ein Verbindungsteil (iii) miteinander verbunden sind.

Aus Polyurethanelastomeren hergestellte Federungselemente werden in Automobilen beispielsweise innerhalb des Fahrwerks verwendet und sind allgemein bekannt. Sie werden insbesondere in Kraftfahrzeugen als Schwingungsdämpfer oder Federelemente eingesetzt. Dabei übernehmen die Federelemente in heutigen Radaufhängungen die Anbindung des Stoßdämpfers an die Karosserie, die Schwingungsentkopplung der Stahlspiralfeder sowie eine progressive Federkennung der Fahrwerksfederung. Durch solche elastische Ankopplungen wird der Fahrkomfort erhöht und ein Höchstmaß an Fahrsicherheit gewährleistet.

Aufgrund der sehr unterschiedlichen Charakteristika und Eigenschaften einzelner Automobilmodelle müssen die Federelemente individuell an die verschiedenen Automobilmodelle angepasst werden, um eine ideale Fahrwerksabstimmung zu erreichen. Beispielsweise können bei der Entwicklung der Federelemente das Gewicht des Fahrzeugs, das Fahrwerk des speziellen Modells, die vorgesehenen Stoßdämpfer und Stahlspiralfedern sowie die gewünschte Federcharakteristik berücksichtigt werden. Hinzu kommt, dass für verschiedene Automobile aufgrund des zur Verfügung stehenden Bauraums individuelle, auf die Baukonstruktion abgestimmte Einzellösungen erfunden werden müssen.

Aus den vorstehend genannten Gründen können die bekannten Lösungen (siehe z.B. JP-A-11-325148) für die Ausgestaltung einzelner Federelemente nicht generell auf neue Automobilmodelle übertragen werden. Bei jeder neuen Entwicklung eines Automobilmodells muss eine neue Form des Federelements entwickelt werden, das den spezifischen Anforderungen des Modells gerecht wird.

Aufgabe der vorliegenden Erfindung war es, ein Konzept für ein Federelement mit einer bislang unerreichte Variabilität bezüglich der Federcharakteristik und dem Blockmaß zu entwickeln. Diese individuelle Einstellung der Federelemente sollte einfach und schnell zu erreichen sein. Des weiteren sollte ein Federelement für ein spezielles, neues Automobilmodell entwickelt werden, das die Stahlspiralfeder akustisch sehr gut entkoppelt sowie eine spezielle progressive Federkennung der Fahrwerksfederung bewirkt, die den spezifischen Anforderungen gerade dieses Modells gerecht wird und einen möglichst guten Fahrkomfort und eine ausgezeichnete Fahrsicherheit gewährleistet.

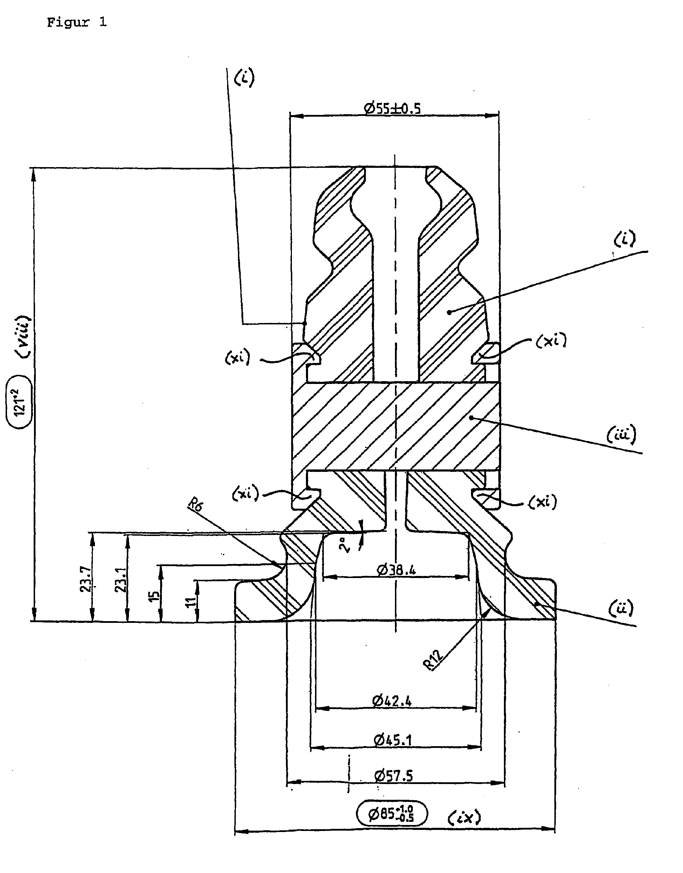

Diese Aufgaben konnten durch die Merkmale von Anspruch 1 gelöst werden. Ein Federelement basierend auf zwei elastischen Formkörpern (i) und (ii) sowie einem Verbindungsteil (iii) ist in der Figur 1 dargestellt. Die Maße sind in [mm] angegeben. Unter dem Ausdruck "elastische Formkörper" sind Formkörper zu verstehen, die auf einem elastischen Material basieren, beispielsweise Gummi oder bekannten elastischen Kunststoffen, beispielsweise den bevorzugten Polyisocyanat-Polyadditionsprodukten.

Die Vorteile der vorliegenden Erfindung sind darin zu sehen, dass durch das Verbindungsteil (iii), das bevorzugt nicht elastisch ist, elastische Formteile mit unterschiedlichen Eigenschaften und Geometrien miteinander kombiniert werden können. Da bislang Federelemente einen elastischen Formkörper enthielten, ist durch diese erfindungsgemäße Kombination mehrerer elastischer Formkörper, bevorzugt zweier elastischer Formkörper eine deutlich höhere Variabilität gegeben. Prinzipiell ist es beispielsweise auch möglich, gemäß der technischen Lehre der vorliegenden Erfindung durch mehr als ein Verbindungsteil (iii) mehr als zwei elastische Formkörper miteinander zu verbinden, beispielsweise drei elastischen Formkörper, zwischen denen sich zwei Verbindungsteile befinden. Durch die erfindungsgemäße Lehre kann die Federcharakteristik des gesamten Federelementes schnell und einfach individuell angepasst werden. Außerdem ist es möglich, für ein vorgegebenes Volumenelement, das mit dem Federelement gefüllt werden soll, das Blockmaß beliebig variierbar, da der räumliche Anteil des Verbindungsteils (iii) je nach Wunsch variiert werden kann. Unter dem Ausdruck Blockmaß ist die verbleibende Höhe des elastischen Formkörpers bei maximaler Belastung (Kompression) zu verstehen. Durch die bevorzugte teilweise Einfassung von (i) und (ii) durch (iii), d.h. (iii) umschließt bevorzugt teilweise den Rand von (i) und (ii) könnte selbst bei gleichen Materialien von (i) und (ii) deren Federcharakteristik verändert werden, wodurch zusätzlich die Variabilität erhöht wird.

Die elastischen Formkörper basieren erfindungsgemäß auf zelligen Polyurethanelastomeren mit einer Dichte nach DIN 53420 von 200 bis 1100, bevorzugt 300 bis 800 kg/m³, einer Zugfestigkeit nach DIN 53571 von ≥ 2, bevorzugt 2 bis 8 N/mm², einer Dehnung nach DIN 53571 von ≥ 300, bevorzugt 300 bis 700 % und einer Weiterreißfestigkeit nach DIN 53515 von ≥ 8, bevorzugt 8 bis 25 N/mm.

Erfindungsgemäß unterscheiden sich zwei im Federelement enthaltende Formkörper in jedem der oben angegebenen Parameter. Die Herstellung von Polyurethanelastomeren ist an späterer Stelle beschrieben. Durch eine Variation ist den Ausgangskomponenten, deren Gewichtsanteilen sowie die Verdichtung in der Form sind Formkörper zugänglich, die unterschiedliche Eigenschaften aufweisen. Dies ist dem Fachmann allgemein bekannt.

Das Verbindungsteil (iii) kann auf allgemein bekannten Materialien basieren, beispielsweise Kunststoffen oder Metallen, z.B. Polyethylen, Polypropylen, Polyoxymethylen, PVC, ABS, Polystyrol, thermoplastischem Polyurethan, Aluminium, Stahl, Kupfer, Eisen. Bevorzugt basiert (iii) auf kompakten Kunststoffen oder Metall, besonders bevorzugt auf unelastischen Materialien.

Das Verbindungsteil weist erfindungsgemäß Kanten (xi) auf, hinter die die elastischen Formkörper (i) und (ii) geklemmt werden. Eine derartige Verbindung (formschlüssige Einknüpfung) ist in der Figur 1 skizziert.

Erfindungsgemäß sind (i), (ii) und (iii) mit einer Bohrung versehen, durch die beispielsweise die Kolbenstange des Fahrwerkdämpfers geführt werden kann. Bevorzugt kann (ii) zur Anbindung des Federelementes an eine Spiralfeder dienen.

Ein beispielhaftes Federelement, jedoch ohne vorstehende Bohrung und daher nicht erfindungsgemäß, ist in Figur 1 zu sehen.

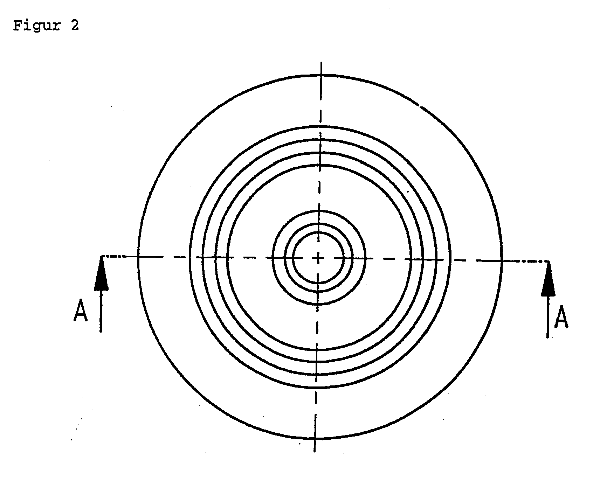

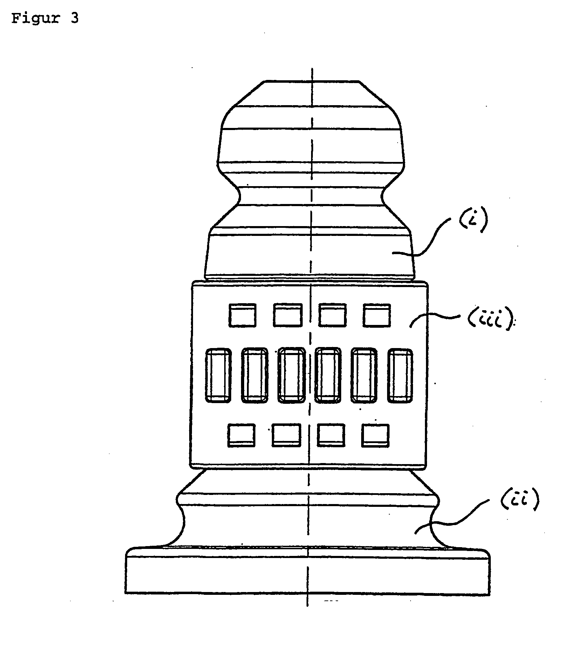

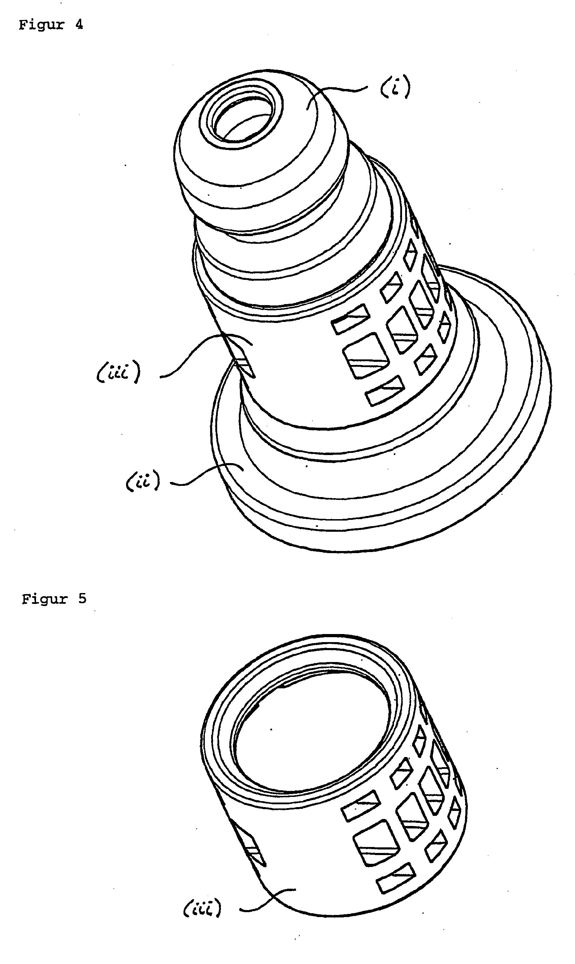

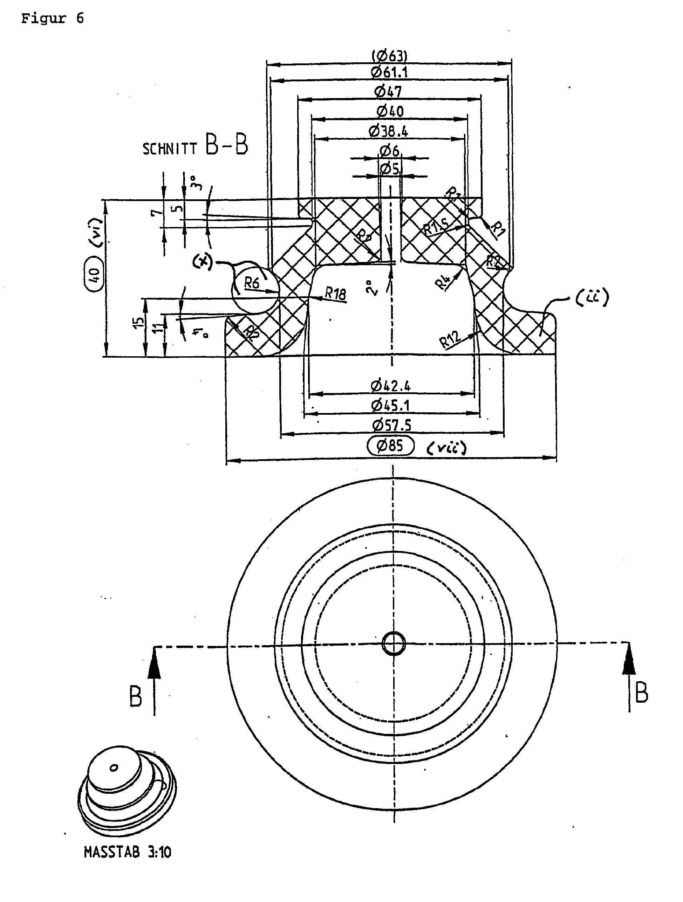

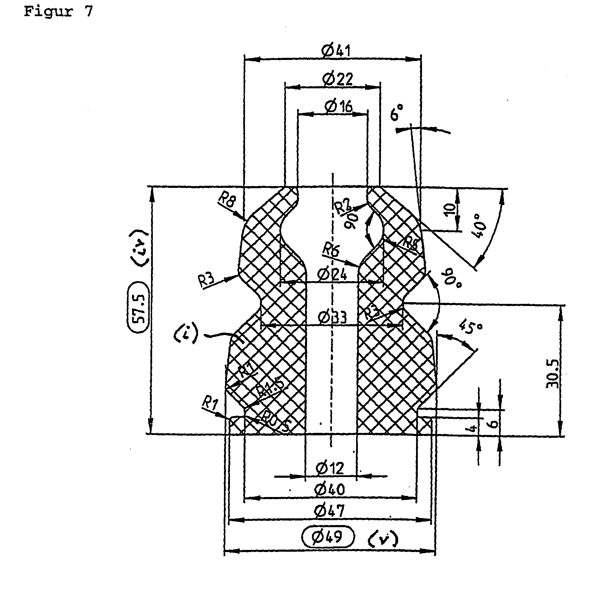

Dies beispielhafte Federelement, das für eine spezielle Anwendung entwickelt und optimiert wurde, ist in der Figur 1 dargestellt. Figur 2 stellt eine Draufsicht auf das Federelement, während die Figuren 3 und 4 weitere Ansichten zeigen. Figur 5 skizziert das Verbindungsteil (iii), während Figur 6 die Maße für den elastischen Formkörper (ii) und Figur 7 die Maße für den elastischen Formkörper (i) angibt. Wie anhand der Figuren ersichtlich, weist das bevorzugte Federelement für (i) eine Höhe (iv) von 57,5 mm und einen maximalen Durchmesser (v) von 49 mm, für (ii) eine Höhe (vi) von 40 mm und einen maximalen Durchmesser (vii) von 85 mm und für das gesamte Federelement eine Höhe (viii) von 119 bis 123 mm und einen maximalen Durchmesser (ix) von 84 bis 86 mm auf. Mit (x) ist das Ende der Spiralfeder bezeichnet, die mit (ii) in Kontakt steht. Die Verbindung von (x) mit (ii) kann durch eine formschlüssige Einknüpfung erfolgen. Das abgebildete Federelement dient somit beispielsweise als Zusatzfeder zur Spiralfeder und als Stahlspiralfederentkopplung. Die in den Figuren angegebenen Längenmaße weisen die Einheit [mm] auf.

Gerade die räumliche Ausgestaltung der Federelemente, d.h. ihre dreidimensionale Form, hat neben ihrem Material eine entscheidenden Einfluss auf ihre Funktion. Über die Form der Federelemente werden die Federwege der Stahlspiralfeder definiert begrenzt sowie die dadurch beeinflussbare Fahrstabilität des Automobiles entsprechend der Kundenforderung gezielt verbessert. Diese dreidimensionale Form des Federelements muss somit individuell für jedes Automobilmodell entwickelt werden.

Die erfindungsgemäßen Dämpfungselemente basieren weise auf mikrozelligen Elastomeren auf der Basis von Polyisocyanat-Polyadditionsprodukten, bevorzugt mit Zellen mit einem Durchmesser von 0,01 mm bis 0,5 mm, besonders bevorzugt 0,01 bis 0,15 mm. Besonders bevorzugt besitzen die Elastomere die eingangs dargestellten physikalischen Eigenschaften. Elastomere auf der Basis von Polyisocyanat-Polyadditionsprodukten und ihre Herstellung sind allgemein bekannt und vielfältig beschreiben, beispielsweise in EP-A 62 835, EP-A 36 994, EP-A 250 969, DE-A 195 48 770 und DE-A 195 48 771.

Die Herstellung erfolgt üblicherweise durch Umsetzung von Isocyanaten mit gegenüber Isocyanaten reaktiven Verbindungen.

Die Elastomere auf der Basis von zelligen Polyisocyanat-Polyadditionsprodukte werden üblicherweise in einer Form hergestellt, in der man die reaktiven Ausgangskomponenten miteinander umsetzt. Als Formen kommen hierbei allgemein übliche Formen in Frage, beispielsweise Metallformen, die aufgrund ihrer Form die erfindungsgemäße dreidimensionale Form des Federelements gewährleisten.

Die Herstellung der Polyisocyanat-Polyadditionsprodukte kann nach allgemein bekannten Verfahren erfolgen, beispielsweise indem man in einem ein- oder zweistufigen Prozess die folgenden Ausgangsstoffe einsetzt:
(a) Isocyanat,
(b) gegenüber Isocyanaten reaktiven Verbindungen,
(c) Wasser und gegebenenfalls
(d) Katalysatoren,
(e) Treibmittel und/oder
(f) Hilfs- und/oder Zusatzstoffe, beispielsweise Polysiloxane und/oder Fettsäuresulfonate.

Die Oberflächentemperatur der Forminnenwand beträgt üblicherweise 40 bis 95°C, bevorzugt 50 bis 90°C.

Die Herstellung der Formteile wird vorteilhafterweise bei einem NCO/OH-Verhältnis von 0,85 bis 1,20 durchgeführt, wobei die erwärmten Ausgangskomponenten gemischt und in einer der gewünschten Formteildichte entsprechenden Menge in ein beheiztes, bevorzugt dichtschließendes Formwerkzeug gebracht werden.

Die Formteile sind nach 5 bis 60 Minuten ausgehärtet und damit entformbar.

Die Menge des in das Formwerkzeug eingebrachten Reaktionsgemisches wird üblicherweise so bemessen, dass die erhaltenen Formkörper die bereits dargestellte Dichte aufweisen.

Die Ausgangskomponenten werden üblicherweise mit einer Temperatur von 15 bis 120°C, vorzugsweise von 30 bis 110°C, in das Formwerkzeug eingebracht. Die Verdichtungsgrade zur Herstellung der Formkörper liegen zwischen 1,1 und 8, vorzugsweise zwischen 2 und 6.

Die zelligen Polyisocyanat-Polyadditionsprodukte werden zweckmäßigerweise nach dem one shot-Verfahren mit Hilfe der Niederdruck-Technik oder insbesondere der Reaktionsspritzguss-Technik (RIM) in offenen oder vorzugsweise geschlossenen Formwerkzeugen, hergestellt. Die Reaktion wird insbesondere unter Verdichtung in einem geschlossenen Formwerkzeug durchgeführt. Die Reaktionsspritzguss-Technik wird beispielsweise beschrieben von H. Piechota und H. Röhr in "Integralschaumstoffe", Carl Hanser-Verlag, München, Wien 1975; D.J. Prepelka und J.L. Wharton in Journal of Cellular Plastics, März/April 1975, Seiten 87 bis 98 und U. Knipp in Journal of Cellular Plastics, März/April 1973, Seiten 76-84.

Bei Verwendung einer Mischkammer mit mehreren Zulaufdüsen können die Ausgangskomponenten einzeln zugeführt und in der Mischkammer intensiv vermischt werden. Als vorteilhaft hat es sich erwiesen, nach dem Zweikomponenten-Verfahren zu arbeiten.

Nach einer besonders vorteilhaften Ausführungsform wird in einem zwei-stufigen Prozess zunächst ein NCO-gruppenhaltiges Prepolymeres hergestellt. Dazu wird die Komponente (b) mit (a) im Überschuss üblicherweise bei Temperaturen von 80°C bis 160°C, vorzugsweise von 110°C bis 150°C, zur Reaktion gebracht. Die Reaktionszeit ist auf das Erreichen des theoretischen NCO-Gehaltes bemessen.

Bevorzugt erfolgt demnach die Herstellung der Formkörper in einem zweistufigen Verfahren, indem man in der ersten Stufe durch Umsetzung von (a) mit (b) ein Isocyanatgruppen aufweisendes Prepolymer herstellt und dieses Prepolymer in der zweiten Stufe in einer Form mit einer Vernetzerkomponente enthaltend gegebenenfalls die weiteren eingangs dargestellten Komponenten umsetzt.

Zur Verbesserung der Entformung der Schwingungsdämpfer hat es sich als vorteilhaft erwiesen, die Formwerkzeuginnenflächen zumindest zu Beginn einer Produktionsreihe mit üblichen äußeren Formtrennmitteln, beispielsweise auf Wachs- oder Silikonbasis oder insbesondere mit wässrigen Seifenlösungen, zu beschichten.

Die Formstandzeiten betragen in Abhängigkeit von der Größe und Geometrie des Formteils durchschnittlich 5 bis 60 Minuten.

Nach der Herstellung der Formteile in der Form können die Formteile bevorzugt für eine Dauer von 1 bis 48 Stunden bei Temperaturen von üblicherweise von 70 bis 120°C getempert werden.

Zu den dem Fachmann allgemein bekannten Ausgangskomponenten zur Herstellung der Polyisocyanat-Polyadditionsprodukte kann folgendes ausgeführt werden:

Als Isocyanate (a) können allgemein bekannte (cyclo)aliphatische und/oder aromatische Polyisocyanate eingesetzt werden. Zur Herstellung der Verbundelemente eignen sich besonders aromatische Diisocyanate, vorzugsweise 2,2'-, 2,4'-und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-diphenyl-diisocyanat, 1,2-Diphenylethandiisocyanat, Phenylendiisocyanat und/oder aliphatische Isocyanate wie z.B. 1,12-Dodecan-, 2-Ethyl-1,4-butan, 2-Methyl-1,5-pentan- 1,4-Butandiisocyanat und vorzugsweise 1,6-Hexamethylendiisocyanat und/oder cycloaliphatische Diisocyanate z.B. Cyclohexan-1,3- und 1,4-diisocyanat, 2,4- und 2,6-Hexahydrotoluyllen-diisocyanat, 4,4'-, 2,4'- und 2,2'-Dicyclohexylmethan-diisocyanat, vorzugsweise 1-Isocyanato-3,3,5-trimethyl-5-isocyanatomethylcyclohexan und/oder Polyisocyanate wie z.B. Polyphenylpolymethylenpolyisocyanate. Die Isocyanate können in Form der reinen Verbindung, in Mischungen und/oder in modifizierter Form, beispielsweise in Form von Uretdionen, Isocyanuraten, Allophanaten oder Biureten, vorzugsweise in Form von Urethan- und Isocyanatgruppen enthaltenden Umsetzungsprodukten, sogenannten Isocyanat-Prepolymeren, eingesetzt werden. Bevorzugt werden gegebenenfalls modifiziertes 2,2'-, 2,4'- und/oder 4,4'-Diphenylmethandiisocyanat (MDI), 1,5-Naphthylendiisocyanat (NDI), 3,3'-Dimethyl-diphenyl-diisocyanat, 2,4- und/oder 2,6-Toluylendiisocyanat (TDI) und/oder Mischungen dieser Isocyanate eingesetzt.

Als gegenüber Isocyanaten reaktive Verbindungen (b) können allgemein bekannte Polyhydroxylverbindungen eingesetzt werden, bevorzugt solche mit einer Funktionalität von 2 bis 3 und bevorzugt einem Molekulargewicht von 60 bis 6000, besonders bevorzugt 500 bis 6000, insbesondere 800 bis 5000. Bevorzugt werden als (b) Polyetherpolyole, Polyesterpolyalkohole und/oder hydroxylgruppenhaltige Polycarbonate eingesetzt.

Bevorzugt werden als (b) Polyesterpolyalkohole, im Folgenden auch als Polyesterpolyole bezeichnet, eingesetzt. Geeignete Polyesterpolyole können beispielsweise aus Dicarbonsäuren mit 2 bis 12 Kohlenstoffatomen und zweiwertigen Alkoholen hergestellt werden. Als Dicarbonsäuren kommen beispielsweise in Betracht: aliphatische Dicarbonsäuren, wie Bernsteinsäure, Glutarsäure, Adipinsäure, Korksäure, Azelainsäure und Sebacinsäure und aromatische Dicarbonsäuren, wie Phthalsäure, Isophthalsäure und Terephthalsäure. Die Dicarbonsäuren können einzeln oder als Gemische verwendet werden. Zur Herstellung der Polyesterpolyole kann es gegebenenfalls vorteilhaft sein, anstelle der Carbonsäure die entsprechenden Carbonsäurederivate, wie Carbonsäureester mit 1 bis 4 Kohlenstoffatomen im Alkoholrest, Carbonsäureanhydride oder Carbonsäurechloride zu verwenden. Beispiele für zweiwertige Alkohole sind Glykole mit 2 bis 16 Kohlenstoffatomen, vorzugsweise 2 bis 6 Kohlenstoffatome, wie z.B. Ethylenglykol, Diethylenglykol, Butandiol-1,4, Pentandiol-1,5, Hexandiol-1,6, Decandiol-1,10, 2-Methylpropan-1,3-diol, 2,2-Dimethyl-propandiol-1,3, Propandiol-1,3 und Dipropylenglykol. Je nach den gewünschten Eigenschaften können die zweiwertigen Alkohole allein oder gegebenfalls in Mischungen untereinander verwendet werden.

Als Polyesterpolyole vorzugsweise verwendet werden Ethandiolpolyadipate, 1,4-Butandiol-polyadipate, Ethandiol-butandiol-polyadipate, 1,6-Hexandiol-neopentylglykol-polyadipate, 1,6-Hexandiol-1,4-Butandiol-polyadipate, 2-Methyl-1,3-propandiol-1,4-butandiol-polyadipate und/oder Polycaprolactone.

Geeignete estergruppenhaltige Polyoxyalkylenglykole, im wesentlichen Polyoxytetramethylenglykole, sind Polykondensate aus organischen, vorzugsweise aliphatischen Dicarbonsäuren, insbesondere Adipinsäure mit Polyoxymethylenglykolen des zahlenmittleren Molekulargewichtes von 162 bis 600 und gegebenenfalls aliphatischen Diolen, insbesondere Butandiol-1,4. Ebenfalls geeignete estergruppenhaltige Polyoxytetramethylenglykole sind solche aus der Polykondensation mit e-Caprolacton gebildete Polykondensate.

Geeignete carbonatgruppenhaltige Polyoxyalkylenglykole, im wesentlichen Polyoxytetramethylenglykole, sind Polykondensate aus diesen mit Alkyl- bzw. Arylcarbonaten oder Phosgen.

Beispielhafte Ausführungen zu der Komponente (b) sind in DE-A 195 48 771, Seite 6, Zeilen 26 bis 59 gegeben.

Zusätzlich zu den bereits beschriebenen gegenüber Isocyanaten reaktiven Komponenten können des weiteren niedermolekulare Kettenverlängerungs- und/oder Vernetzungsmitteln (b1) mit einem Molekulargewicht von kleiner 500, bevorzugt 60 bis 499 eingesetzt werden, beispielsweise ausgewählt aus der Gruppe der di- und/oder trifunktionellen Alkohole, di- bis tetrafunktionellen Polyoxyalkylen-polyole und der alkylsubstituierten aromatischen Diamine oder von Mischungen aus mindestens zwei der genannten Kettenverlängerungs- und/oder Vernetzungsmittel.

Als (b1) können beispielsweise Alkandiole mit 2 bis 12, bevorzugt 2, 4, oder 6 Kohlenstoffatomen verwendet werden, z.B. Ethan-, 1,3-Propan-, 1,5-Pentan-, 1,6-Hexan-, 1,7-Heptan-, 1,8-Octan-, 1,9-Nonan-, 1,10-Decandiol und vorzugsweise 1,4-Butandiol, Dialkylenglykole mit 4 bis 8 Kohlenstoffatomen, wie z.B. Diethylenglykol und Dipropylenglykol und/oder di- bis tetrafunktionelle Polyoxyalkylen-polyole.

Geeignet sind jedoch auch verzweigtkettige und/oder ungesättigte Alkandiole mit üblicherweise nicht mehr als 12 Kohlenstoffatomen, wie z.B. 1,2-Propandiol, 2-Methyl-, 2,2-Dimethyl-propandiol-1,3, 2-Butyl-2-ethylpropandiol-1,3, Buten-2-diol-1,4 und Butin-2-diol-1,4, Diester der Terephthalsäure mit Glykolen mit 2 bis 4 Kohlenstoffatomen, wie z.B. Terephthalsäure-bis-ethylenglykol- oder -butandiol-1,4, Hydroxyalkylenether des Hydrochinons oder Resorcins, wie z.B. 1,4-Di-(b-hydroxyethyl)-hydrochinon oder 1,3-Di(b-hydroxyethyl)-resorcin, Alkanolamine mit 2 bis 12 Kohlenstoffatomen, wie z.B. Ethanolamin, 2-Aminopropanol und 3-Amino-2,2-dimethylpropanol, N-Alkyldialkanolamine, wie z.B. N-Methyl- und N-Ethyl-diethanolamin.

Als höherfunktionelle Vernetzungsmittel (b1) seien beispielsweise tri- und höherfunktionelle Alkohole, wie z.B. Glycerin, Trimethylolpropan, Pentaerythrit und Trihydroxycyclohexane sowie Trialkanolamine, wie z.B. Triethanolamin genannt.

Als Kettenverlängerungsmittel können verwendet werden: alkylsubstituierte aromatische Polyamine mit Molekulargewichten vorzugsweise von 122 bis 400, insbesondere primäre aromatische Diamine, die in ortho-Stellung zu den Aminogruppen mindestens einen Alkylsubstituenten besitzen, welcher die Reaktivität der Aminogruppe durch sterische Hinderung vermindert, die bei Raumtemperatur flüssig und mit den höhermolekularen, bevorzugt mindestens difunktionellen Verbindungen (b) unter den Verarbeitungsbedingungen zumindest teilweise, vorzugsweise jedoch vollständig mischbar sind.

Zur Herstellung der Formkörper können die technisch gut zugänglichen 1,3,5-Triethyl-2,4-phenylendiamin, 1-Methyl-3,5-diethyl-2,4-phenylendiamin, Mischungen aus 1-Methyl-3,5-diethyl-2,4- und -2,6-phenylendiaminen, sogenanntes DETDA, Isomerengemische aus 3,3'-di- oder 3,3',5,5'-tetraalkylsubstituierten 4,4'-Diaminodiphenylmethanen mit 1 bis 4 C-Atomen im Alkylrest, insbesondere Methyl-, Ethyl- und Isopropylreste gebunden enthaltende 3,3',5,5'-tetraalkylsubstituierte 4,4'-Diamino-diphenylmethane sowie Gemische aus den genannten tetraalkylsubstituierten 4,4'-Diamino-diphenylmethanen und DETDA verwendet werden.

Zur Erzielung spezieller mechanischer Eigenschaften kann .es auch zweckmäßig sein, die alkylsubstituierten aromatischen Polyamine im Gemisch mit den vorgenannten niedermolekularen mehrwertigen Alkoholen, vorzugsweise zwei- und/oder dreiwertigen Alkoholen oder Dialkylenglykolen zu verwenden.

Bevorzugt werden jedoch keine aromatischen Diamine eingesetzt. Bevorzugt erfolgt die Herstellung der Produkte somit in Abwesenheit von aromatischen Diaminen.

Die Herstellung der zelligen Polyisocyanat-Polyadditionsprodukte kann bevorzugt in Gegenwart von Wasser (c) durchgeführt werden. Das Wasser wirkt sowohl als Vernetzer unter Bildung von Harnstoffgruppen als auch aufgrund der Reaktion mit Isocyanatgruppen unter Bildung von Kohlendioxid als Treibmittel. Aufgrund dieser doppelten Funktion wird es in dieser Schrift getrennt von (e) und (b) aufgeführt. Per Definition enthalten die Komponenten (b) und (e) somit kein Wasser, das per Definition ausschließlich als (e) aufgeführt wird.

Die Wassermengen, die zweckmäßigerweise verwendet werden können, betragen 0,01 bis 5 Gew.-%, vorzugsweise 0,3 bis 3,0 Gew.-%, bezogen auf das Gewicht der Komponente (b). Das Wasser kannvollständig oder teilweise in Form der wässrigen Lösungen der sulfonierten Fettsäuren eingesetzt werden.

Zur Beschleunigung der Reaktion können dem Reaktionsansatz sowohl bei der Herstellung eines Prepolymeren als auch gegebenenfalls bei der Umsetzung eines Prepolymeren mit einer Vernetzerkomponente allgemein bekannte Katalysatoren (d) zugefügt werden. Die Katalysatoren (d) können einzeln wie auch in Abmischung miteinander zugegeben werden. Vorzugsweise sind dies metallorganische Verbindungen, wie Zinn-(II)-Salze von organischen Carbonsäuren, z.B. Zinn-(II)-dioctoat, Zinn-(II)-dilaurat, Dibutylzinndiacetat und Dibutylzinndilaurat und tertiäre Amine wie Tetramethylethylendiamin, N-Methylmorpholin, Diethylbenzylamin, Triethylamin, Dimethylcyclohexylamin, Diazabicyclooctan, N,N'-Dimethylpiperazin, N-Methyl,N'-(4-N-Dimethylamino-)Butylpiperazin, N,N,N',N",N"-Pentamethyldiethylendiamin oder ähnliche.

Weiterhin kommen als Katalysatoren in Betracht: Amidine, wie z.B. 2,3-Dimethyl-3,4,5,6-tetrahydropyrimidin, Tris-(dialkylaminoalkyl)-s-hexahydrotriazine, insbesondere Tris-(N,N-dimethylaminopropyl)-s-hexahydrotriazin, Tetraalkylammoniumhydroxide, wie z.B. Tetramethylammoniumhydroxid, Alkalihydroxide, wie z.B. Natriumhydroxid, und Alkalialkoholate, wie z.B. Natriummethylat und Kaliumisopropylat, sowie Alkalisalze von langkettigen Fettsäuren mit 10 bis 20 C-Atomen und gegebenenfalls seitenständigen OH-Gruppen.

Je nach einzustellender Reaktivität gelangen die Katalysatoren (d) in Mengen von 0,001 bis 0,5 Gew.-%, bezogen auf das Prepolymere, zur Anwendung.

Gegebenenfalls können in der Polyurethanherstellung übliche Treibmittel (e) verwendet werden. Geeignet sind beispielsweise niedrig siedende Flüssigkeiten, die unter dem Einfluss der exothermen Polyadditionsreaktion verdampfen. Geeignet sind Flüssigkeiten, welche gegenüber dem organischen Polyisocyanat inert sind und Siedepunkte unter 100°C aufweisen. Beispiele derartiger, vorzugsweise verwendeter Flüssigkeiten sind halogenierte, vorzugsweise fluorierte Kohlenwasserstoffe, wie z.B. Methylenchlorid und Dichlormonofluormethan, per- oder partiell fluorierte Kohlenwasserstoffe, wie z.B. Trifluormethan, Difluormethan, Difluorethan, Tetrafluorethan und Heptafluorpropan, Kohlenwasserstoffe, wie z.B. n- und iso-Butan, n- und iso-Pentan sowie die technischen Gemische dieser Kohlenwasserstoffe, Propan, Propylen, Hexan, Heptan, Cyclobutan, Cyclopentan und Cyclohexan, Dialkylether, wie z.B. Dimethylether, Diethylether und Furan, Carbonsäureester, wie z.B. Methyl- und Ethylformiat, Ketone, wie z.B. Aceton, und/oder fluorierte und/oder perfluorierte, tertiäre Alkylamine, wie z.B. Perfluor-dimethyliso-propylamin. Auch Gemische dieser niedrigsiedenden Flüssigkeiten untereinander und/oder mit anderen substituierten oder unsubstituierten Kohlenwasserstoffen können verwendet werden.

Die zweckmäßigste Menge an niedrigsiedender Flüssigkeit zur Herstellung derartiger zellhaltiger elastischer Formkörper aus Harnstoffgruppen gebunden enthaltenden Elastomeren hängt ab von der Dichte, die man erreichen will, sowie von der Menge des bevorzugt mit verwendeten Wassers. Im allgemeinen liefern Mengen von 1 bis 15 Gew.-%, vorzugsweise 2 bis 11 Gew.-%, bezogen auf das Gewicht der Komponente (b), zufriedenstellende Ergebnisse. Besonders bevorzugt wird ausschließlich Wasser (c) als Treibmittel eingesetzt.

Bei der Herstellung des Formteile können Hilfs- und Zusatzstoffe (f) eingesetzt werden. Dazu zählen beispielsweise allgemein bekannte oberflächenaktive Substanzen, Hydrolyseschutzmittel, Füllstoffe, Antioxidantien, Zellregler, Flammschutzmittel sowie Farbstoffe. Als oberflächenaktive Substanzen kommen Verbindungen in Betracht, welche zur Unterstützung der Homogenisierung der Ausgangsstoffe dienen und gegebenenfalls auch geeignet sind, die Zellstruktur zu regulieren. Genannt seien beispielsweise zu den Emulgatoren zusätzliche Verbindungen mit emulgierender Wirkung, wie die Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure. Des weiteren kommen Schaumstabilisatoren in Frage, wie z.B. oxethylierte Alkylphenole, oxethylierte Fettalkohole, Paraffinöle, Ricinusöl- bzw. Ricinolsäureester, Türkischrotöl und Erdnussöl und Zellregler, wie Paraffine und Fettalkohole. Außerdem können als (f) Polysiloxane und/oder Fettsäuresulfonate eingesetzt werden. Als Polysiloxane können allgemein bekannte Verbindungen verwendet werden, beispielsweise Polymethylsiloxane, Polydimethylsiloxane und/oder Polyoxyalkylen-Silikon-Copolymere. Bevorzugt weisen die Polysiloxane eine Viskosität bei 25°C von 20 bis 2000 MPas auf.

Als Fettsäuresulfonate können allgemein bekannte sulfonierte Fettsäuren, die auch kommerziell erhältlich sind, eingesetzt werden. Bevorzugt wird als Fettsäuresulfonat sulfoniertes Rizinusöl eingesetzt.

Die oberflächenaktiven Substanzen werden üblicherweise in Mengen von 0,01 bis 5 Gew.-Teilen, bezogen auf 100 Gew.-Teile der Komponenten (b) angewandt.

## Patentansprüche

1. Automobil enthaltend mindestens ein Federelement basierend auf mindestens zwei elastischen Formkörpern (i, ii), die über mindestens ein Verbindungsteil (iii) miteinander verbunden sind, wobei das Verbindungsteil Kanten (xi) aufweist, hinter die die elastischen Formkörper (i, ii) geklemmt werden und
wobei die elastischen Formkörper (i, ii) und verbindungsteil (iii) mit einer Bohrung versehen sind,
**dadurch gekennzeichnet, dass** durch die Bohrung die Kolbenstange eines Fahrwerkdämpfers geführt wird, die elastischen Formkörper (i, ii) auf zelligen Polyurethanelastomeren mit einer Dichte nach DIN 53420 von 200 bis 1100, einer Zugfestigkeit nach DIN 53571 von ≥ 2 N/mm², einer Dehnung nach DIN 53571 von ≥ 300 % und einer Weiterreißfestigkeit nach DIN 53515 von ≥ 8 N/mm basieren und sich zwei im Federelement enthaltende Formkörper (i, ii) in jedem der angegebenen Parameter unterscheiden.

2. Automobil gemäß Anspruch 1, **dadurch gekennzeichnet, dass** das Verbindungsteil (i, ii) auf kompakten Kunststoffen oder Metall basiert.

3. Automobil gemäß Anspruch 1, **dadurch gekennzeichnet, dass** ein erster der mindestens zwei elastischen Formkörper (i) eine Höhe (iv) von 57,5 mm und einen maximalen Durchmesser (v) von 49 mm, ein zweiter des mindestens zwei elastischen Formkörper (ii) eine Höhe (vi) von 40 mm und einen maximalen Durchmesser (vii) von 85 mm und das gesamte Federelement eine Höhe (viii) von 119 bis 123 mm und einen maximalen Durchmesser (ix) von 84 bis 86 mm aufweisen.

## Claims

1. An automobile comprising at least one spring element based on at least two elastic moldings (i, ii) connected to one another via at least one connector (iii), the connector having rims (xi) behind which the elastic mouldings (i, ii) are clamped and the elastic moldings (i, ii) and connector (iii) being provided with a hole, wherein the connecting rod of a chassis mounting is passed through the hole, wherein the elastic moldings are based on cellular polyurethane elastomers with density to DIN 53420 of from 200 to 1100 kg/m³, tensile strength to DIN 53571 of ≥ 2 N/mm², elongation to DIN 53571 of ≥ 300%, and tear propagation resistance to DIN 53515 of ≥ 8 N/mm, and wherein two moldings (i, ii) comprised in the spring element differ in each of the given parameters.

2. The automobile accordin to claim 1, wherein the connector (iii) is based on compact plastics or metal.

3. The automobile according to claim 1, wherein a first of the at least two elastic moldings (i) has height (iv) of 57.5 mm and maximum diameter (v) of 49 mm, a second of the at least two elastic moldings (ii) has height (vi) of 40 mm and maximum diameter (vii) of 85 mm, and the entire spring element has height (viii) of from 119 to 123 mm and maximum diameter (ix) of from 84 to 86 mm.

## Revendications

1. Automobile contenant au moins un élément à ressort basé sur au moins deux corps moulés élastiques (i, ii), qui sont reliés l'un à l'autre par au moins une partie de raccordement (iii), dans lequel la partie de raccordement présente des arêtes (xi), derrière lesquelles les corps moulés élastiques (i, ii) sont bloqués, et dans lequel les corps moulés élastiques (i, ii) et la partie de raccordement (iii) sont pourvus d'un perçage, **caractérisée en ce que** l'on fait passer à travers le perçage la tige de piston d'un amortisseur de châssis, les corps moulés élastiques (i, ii) sont basés sur des élastomères de polyuréthanne cellulaires d'une densité selon la norme DIN 53420 de 200 à 1100, d'une résistance à la traction selon la norme DIN 53571 ≥ 2 N/mm², d'un allongement selon la norme DIN 53571 ≥ 300% et d'une résistance à la déchirure amorcée selon la norme DIN 53515 ≥ 8 N/mm et deux corps moulés (i, ii) contenus dans l'élément à ressort se différencient par chacun des paramètres indiqués.

2. Automobile selon la revendication 1, **caractérisée en ce que** la partie de raccordement (iii) est à base de matériaux synthétiques compacts ou de métaux.

3. Automobile selon la revendication 1, **caractérisée en ce qu'**un premier des au moins deux corps moulés élastiques (i) présente une hauteur (iv) de 57,5 mm et un diamètre maximal (v) de 49 mm, un second des au moins deux corps moulés élastiques (ii) présente une hauteur (vi) de 40 mm et un diamètre maximal (vii) de 85 mm et l'élément à ressort global présente une hauteur (viii) de 119 à 123 mm et un diamètre maximal (ix) de 84 à 86 mm.
